# EUROPÄISCHE PATENTSCHRIFT

(11) **EP 2 457 444 B1**
(45) Veröffentlichungstag und Bekanntmachung des Hinweises auf die Patenterteilung: **25.04.2018**
(21) Anmeldenummer: 10192860.4
(22) Anmeldetag: 29.11.2010
(51) Int. Cl.: A22C 11/02

(54) **Skalierbare Maschine und Verfahren zu ihrem Betrieb**
Scalable machine and method for its operation
Machine échelonnable et procédé pour son opération

(43) Veröffentlichungstag der Anmeldung: 30.05.2012
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker Patent- und Rechtsanwälte PartG mbB

(56) Entgegenhaltungen:
- EP-A1- 1 997 384
- WO-A1-2006/001991
- US-A1- 2004 076 736
- US-A1- 2004 116 059
- US-A1- 2005 053 699
- US-A1- 2005 247 026
- US-A1- 2008 053 042

## Beschreibung

Die Erfindung betrifft eine Nahrungsmittelmaschine gemäß dem Oberbegriff des Anspruchs 1 sowie einem Verfahren zum Betreiben einer entsprechenden Nahrungsmittelmaschine entsprechend dem Anspruch 8.

Nahrungsmittelmaschinen, wie Füllmaschinen, die optional eine Abdrehlinie oder andere Zusatzgeräte aufweisen, sind aus dem Stand der Technik bereits wohlbekannt.

Die Maschinenhersteller entwickeln dabei für jeden vorhersehbaren Anwendungsbereich bestimmte angepasste Maschinentypen. Der Kunde wählt dann vor der Kaufentscheidung für eine neue Nahrungsmittelmaschine, z. B. Vakuumfüller die geforderte Leistung sowie den voraussichtlich benötigten Funktionsumfang aus. Hat sich der Kunde für einen bestimmten Maschinentyp entschieden, so kann der Leistungs- und Funktionsumfang nach der Auslieferung nicht mehr geändert werden.

Stellt sich die Kundenwahl später als falsch heraus, kann es sein, dass infolge veränderter Anforderungen die ausgewählte Maschine nicht mehr zum neuen Anwendungszweck passt. Dann bleibt nur der Umbau bzw. Austausch der Maschine, was jeweils mit einem hohen Aufwand und entsprechenden Kosten verbunden ist. Zudem stellt dies eine sehr unflexible und unwirtschaftliche Lösung des Problems dar. Darüber hinaus sind kurzfristige temporäre Leistungs- und/oder Funktionserweiterungen auf diese Art nicht realisierbar.

Auch für die Herstellerseite ergibt sich der Nachteil, dass für unterschiedliche Anwendungszwecke verschiedene Anlagentypen entwickelt und hergestellt werden müssen, was insbesondere bei der Herstellung, Vertrieb und Wartung mit hohen Kosten verbunden ist.

Aus der US 2008/053042 A1 ist eine Nahrungsmittelmaschine bekannt, bei der die Funktion von Prozesseinheiten in Abhängigkeit von einem Sensorsignal aktiviert werden kann. In dieser Druckschrift werden lediglich Prozessparameter eingestellt zum Betrieb der Nahrungsmittelmaschine, jedoch wird kein Leistungsbereich durch eine Freischalteinrichtung freigeschaltet.

Die US 2005/247026 A1 beschreibt eine Nahrungsmittelmaschine mit mehreren Funktionselementen. Über einen Programmcode können bestimmte Funktionen beim Betrieb der Maschine gesteuert werden.

Hiervon ausgehend liegt der vorliegenden Erfindung die Aufgabe zugrunde, eine Nahrungsmittelmaschine und ein entsprechendes Betriebsverfahren bereitzustellen, die ermöglichen, dass Leistungs- und/oder Funktionsänderungen kurzfristig auf einfache Art und Weise mit geringem Aufwand realisiert werden können.

Erfindungsgemäß wird die Aufgabe durch die Merkmale der Ansprüche 1 und 8 gelöst.

Gemäß der vorliegenden Erfindung weist eine Nahrungsmittelmaschine also ein oder mehrere Funktionsmodule auf, die durch entsprechende Steuerabschnitte angesteuert werden. Gemäß der Erfindung ist es nun möglich, eine Maschine in leistungsreduzierter Ausführung als skalierbare Maschine anzubieten. Ändert sich die Anforderung, kann ein Leistungsbereich aus mehreren möglichen Leistungsbereichen mindestens eines Funktionsmoduls entsprechend freigeschaltet werden, um beispielsweise die Leistung zu erhöhen. Dazu ist eine Freischalteinrichtung (z.B. codiertes Freischaltmodul) vorgesehen, über die nach Eingabe einer Zugriffsberechtigung ein entsprechender Leistungsbereich erhöht werden kann. Unter Eingabe einer Zugriffsberechtigung versteht man beispielsweise eine Aktivierung über eine Eingabe eines entsprechenden Codes, Einschieben einer entsprechenden Guthabenkarte oder eines Chips. Die Eingabe der Zugriffsberechtigung kann auch durch Fernaktivierung erfolgen, z. B. nach Überweisung eines entsprechenden Betrages oder mittels Online-Freischaltung, z. B. in Verbindung mit Kreditkartenbezahlung, Online-Abbuchung, Vorkasse, Bezahlsystemen, etc. Die Freischaltung, d. h. die Funktions- bzw. Leistungsanpassung kann dann z. B. durch den Kunden selbst oder durch Service-Personal vor Ort erfolgen. Es ist auch möglich zunächst bestimmte Leistungsbereiche freizuschalten und dann die tatsächlich verwendeten Leistungsbereiche z.B. online zu erfassen und dann abzurechnen.

In diesem dann festgelegten Leistungs- und Funktionsbereich kann der Kunde dann selbst für seinen speziellen Prozess die aktuellen Parameter zum Betreiben der Nahrungsmittelmaschine wählen. Die Freischaltung kann beispielsweise auch zeitlich begrenzt sein.

Somit ergibt sich der Vorteil, dass der Kunde flexibel auf veränderte Anforderungen reagieren kann, wie:
- Temporäre Leistungserhöhung z. B. zur Grill-Saison, Weihnachtsproduktion, einmaliger Großauftrag oder bei Ausfall einer anderen Maschine, etc.
- Zeitlich unbefristete Leistungserhöhung zur generellen Erhöhung der Produktionskapazität.
- Überbrückung von Lieferengpässen von Neumaschinen durch temporäre Leistungserhöhung bestehender Maschinen.

Gemäß einer bevorzugten Ausführungsform sind auch z.B. folgende Erweiterungen möglich:
- Temporäre Funktionserweiterungen z. B. zur Erprobung der Herstellung von neuen bzw. verbesserten Produkten durch Kunden oder zur Produktion saisonaler Produkte, welche keine generelle Funktionserweiterung und besonders keinen Maschinenneukauf rechtfertigen können.
- Generelle Funktionserweiterungen.

Gemäß einer bevorzugten Ausführungsform kann daher nach Eingabe einer Zugrifffsberechtigung in die Freischalteinrichtung auch mindestens ein Funktionsmodul freigeschaltet werden.

Gemäß der Erfindung ist die Freischalteinrichtung mit mindestens einer Eingabeeinheit (z. B. Tastatur, Einschub für einen Chip bzw. Chipkarte oder einen anderen Datenspeicher, Datenleitung, optische Sensorik, Einheit zur Spracherkennung, etc.) verbunden, über die ein entsprechender Code etc., wie zuvor beschrieben, zugeführt werden kann. Über diese Eingabeeinrichtung kann also die Zugriffsberechtigung und auch die Art und/oder der Umfang der Funktions- bzw. der Leistungsanpassung eingegeben werden. Die Art und/oder der Umfang der Leistungsanpassung kann auch über eine weitere Eingabeeinheit, z. B. eine Tastatur, an die Freischalteinrichtung bzw. die entsprechenden Steuerabschnitte geleitet werden. Die Freischalteinrichtung ist dann mit Steuerabschnitten für die entsprechenden Funktionsmodule verbunden. Die Freischalteinrichtung kann Signale, entsprechend einer Eingabe über die gewünschte Leistungs- und/oder Funktionsanpassung an die Steuerabschnitte leiten, wodurch in Abhängigkeit eines entsprechenden Signals das entsprechende Funktionsmodul ansteuerbar ist oder nicht ansteuerbar ist, und das entsprechende Funktionsmodul in einem bestimmten Leistungsbereich betreibbar ist.

Dabei können entweder mehrere wählbare, vorab eingestellte Leistungsbereiche in einem Speicher festgelegt sein, wobei dann bestimmte Leistungsbereiche freischaltbar sind oder die Leistungsbereiche können stufenlos freischaltbar sein. Alternativ kann der gewählte Leistungsbereich während des Freischaltprozesses an die Steuerung bzw. die Steuerabschnitte übermittelt werden.

Zum Beispiel kann der freigeschaltete Leistungsbereich auf der Chipkarte gespeichert sein und die Steuerung holt sich einmalig oder laufend den Wert, ohne dass dieser in der Steuerung gespeichert wird.

Vorteilhafterweise ist bei einer Maschine mit leistungs- und/oder funktionsreduzierter Ausführung, der Leistungsbereich eines entsprechenden Funktionsmoduls auf eine maximale Leistung begrenzbar, die unterhalb der maximal möglichen Leistung, das bedeutet, der maximal möglichen Auslastung, liegt. Der Kunde kann je nach Bedarf und finanziellen Möglichkeiten dann gegebenenfalls bis zur maximal möglichen Leistung der Maschine eine beliebige Leistung bzw. einen beliebigen Leistungsbereich frei wählen und erhält so seine bezüglich Leistung bzw. Preis höchst flexibel individuell angepasste Maschine. Da die Maschine auf die Maximalleistung ausgelegt ist, entfällt das aufwändige Generieren zusätzlicher Maschinentypen. Es ist somit keine zusätzliche Dokumentation und keine zusätzliche Logistik bzw. Teileversorgung (viele Gleichteile), Maschinenlagerhaltung, Schulungsaufwand für Monteure, etc., erforderlich. So kann das gesamte Maschinenprogramm eines Herstellers oder nur ein Teil davon leistungsreduziert zum reduzierten Preis angeboten werden. Damit kann der Hersteller einfach, flexibel und kostengünstig auf Kundenwünsche reagieren und z. B. auch im Wettbewerb mit Billiganbietern, gezielter agieren.

Dabei kann entweder eine Maschine mit Standardauslegung in leistungs- und/oder funktionsreduzierter Ausführung angeboten werden oder es besteht weiter die Möglichkeit, die Komponenten der Maschine bereits bei der Entwicklung so auszulegen, dass verschiedene Leistungsbereiche und/oder Funktionen abgedeckt werden können. Zum Beispiel wird dann ein Antrieb eingebaut, der standardmäßig nicht voll ausgelastet ist. Zum Auslieferungszeitpunkt kann dann beispielsweise die tatsächlich vom Kunden gewünschte Leistung freigeschaltet werden. Auch zu jedem beliebigen späteren Zeitpunkt kann dann der entsprechende Antrieb bei Bedarf eine höhere als die zunächst im Auslieferungszustand eingestellte Leistung bereitstellen. Auch diese Vorgehensweise ermöglicht den Einbau vieler Gleichteile mit den bekannten Vorteilen.

Die Freischalteinrichtung oder die Steuerabschnitte für unterschiedliche Funktionsmodule kann derart ausgelegt sein, dass bei der Begrenzung der Leistung eines Funktionsmoduls automatisch der Leistungsbereich anderer Funktionsmodule begrenzt wird und/oder ein erhöhter Leistungsbereich eines Funktionsmoduls nur dann freischaltbar wird, wenn auch ein entsprechend erhöhter Leistungsbereich eines anderen oder anderer Funktionsmodule freigeschaltet worden sind. Es können auch Funktionsmodule (z. B. Wolf) in der Leistung erhöht werden, ohne die Leistung anderer Funktionsmodule (z.B. des Förderwerks) zu erhöhen.

Somit wird ein einwandfreier Betrieb der Nahrungsmittelmaschine gewährleistet. Störungen aufgrund unterschiedlicher Leistungsbereiche verschiedener Funktionsmodule können somit wirksam verhindert werden.

Vorzugsweise ist die Nahrungsmittelmaschine eine Füllmaschine, die optional eine Abdrehlinie, und/oder eine Aufhängeeinheit und/oder einen Füllwolf etc. aufweist. Dabei kann die Nahrungsmittelmaschine vorzugsweise mindestens eines folgender Funktionsmodule aufweisen: Antrieb für das Förderwerk, Antrieb für die Förderkurve, Antrieb(e) für die Abdreheinheit, den Füllwolf, die Verdrängereinheit, die Trenneinheit, für eine Transporteinheit, für eine Aufhängeeinrichtung, Vakuumpumpe für den Füller, für die Hebevorrichtung, Lüftung und ggfs. weitere Antriebe. Mindestens eines der folgenden Funktionsmodule kann über die mindestens eine Freischalteinrichtung freischaltbar sein: Antrieb der Förderkurve, Antrieb der Abdreheinheit, Füllwolf-Antrieb, Antrieb der Verdrängereinheit, Antrieb der Trenneinheit, Antrieb der Transporteinheit, Antrieb der Aufhängeeinrichtung, Vakuumpumpe, Antrieb der Hebevorrichtung und ggfs. weitere Antriebe. Vorzugsweise sind in mindestens einem der folgenden Funktionsmodulen unterschiedliche Leistungsbereiche freischaltbar: Antrieb des Förderwerks, Antrieb für die Förderkurve, Antrieb der Abdreheinheit, Antrieb des Füllwolfs, Antrieb der Verdrängereinheit, Antrieb der Trenneinheit, Antrieb der Transporteinheit, Antrieb der Aufhängeeinrichtung, Vakuumpumpe, Antrieb für die Hebevorrichtung, Lüftung und ggfs. weitere Antriebe.

Vorzugsweise ist die Freischalteinrichtung in die Steuerung integriert mit Code-Eingabe über eine Tastatur. Die Freischalteinrichtung kann beispielsweise mindestens ein Element folgender Gruppe umfassen: ein Software- oder Hardware-Interlock, logische Verknüpfungen in einer Steuerschaltung, eine mechanische Verriegelung, einen optischen Sensor zur Erfassung von 2D- oder 3D-Codes.

Die vorliegende Erfindung wird nachfolgend unter Bezugnahme der folgenden Figuren näher erläutert:
- Fig. 1: zeigt grob schematisch den Aufbau einer Füllmaschine mit einer Abdrehlinie gemäß der vorliegenden Erfindung.
- Fig. 2: zeigt schematisch ein Blockschaltbild gemäß der vorliegenden Erfindung.
- Fig. 3: zeigt ein Diagramm mit unterschiedlichen Leistungsbereichen gemäß der vorliegenden Erfindung.
- Fig. 4: zeigt grob schematisch den Ablauf des erfindungsgemäßen Verfahrens.

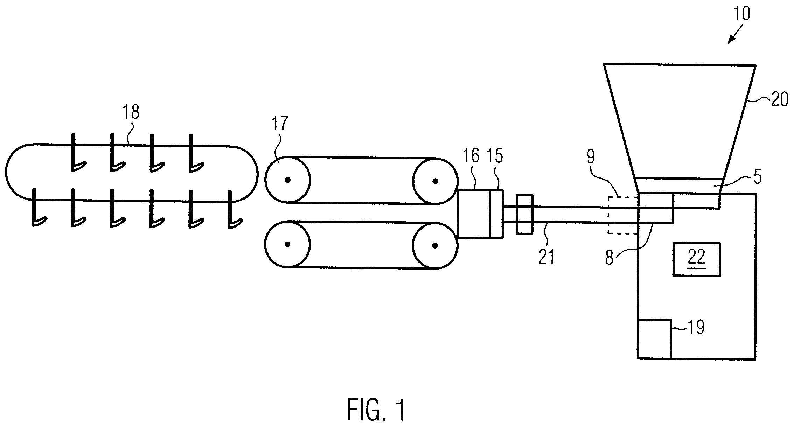

Fig. 1 zeigt grobschematisch eine Nahrungsmittelmaschine gemäß der vorliegenden Erfindung, hier eine Füllmaschine 10, mit einer daran angefügten Abdrehlinie. Die Füllmaschine ist z. B. eine Vakuumfüllmaschine. Die Füllmaschine weist beispielsweise einen Trichter 20 auf, über den pastöse Masse einem Förderwerk 5, beispielsweise einer Flügelzellenpumpe zugeführt wird. Im Trichter kann eine Förderkurve angeordnet sein (nicht dargestellt) zum Fördern der pastösen Masse in Richtung Förderwerk. Die Förderkurve weist einen Antrieb auf. Das Förderwerk 5 schiebt dann die pastöse Masse über ein Füllrohr 21 in eine Wursthülle. Das Förderwerk 5 umfasst dabei einen entsprechenden Antrieb. Schließlich kann die Füllmaschine auch eine Vakuumpumpe 19 aufweisen, um im Förderwerk 5 einen Unterdruck zu erzeugen. Vorzugsweise ist das Füllrohr 21 um seine Längsachse antreibbar und weist dazu einen entsprechenden Antrieb 8 auf. Somit können die Würste in bekannter Weise abgedreht werden. Schließlich kann eine Füllmaschine noch optional den durch 9 dargestellten Füllwolf aufweisen zum Zerkleinern der Füllmasse. Weiter kann die Nahrungsmittelmaschine eine Verdrängereinheit 15 aufweisen, die das pastöse Gut in der Wursthülle zum Erzeugen von Einzelwürsten verdrängt. Dabei werden beispielsweise zwei gegenüberliegende Abteilelemente zum Einschnüren des gefüllten Wurststrangs aufeinander zu bewegt. Die Verdrängereinheit 15 weist dabei einen entsprechenden Antrieb auf. Ferner kann die Vorrichtung zum Durchtrennen der abgeteilten Würste noch eine Trenneinheit 16 aufweisen, die die Einzelwürste auseinanderschneidet und die ebenfalls einen Antrieb für die Messer aufweist. In Transportrichtung nach der Verdränger- oder Trenneinheit ist z.B. eine Transporteinheit 17, hier in Form einer Längeneinheit, die zwei gegenüberliegende umlaufende Transportmittel aufweist, vorgesehen. In Transportrichtung nach der Transporteinrichtung kann eine Aufhängeeinrichtung 18 mit einer Vielzahl von umlaufenden Haken vorgesehen sein, an denen die Einzelwürste oder aber auch eine Wurstkette aufhängbar ist. Fig. 1 ist nur ein Beispiel für eine entsprechende Füllmaschine bzw. Abdrehlinie, wobei der Aufbau stark variieren kann. Eine Füllmaschine kann z.B. auch eine Hebevorrichtung und einen Lüfter mit entsprechendem Antrieb aufweisen.

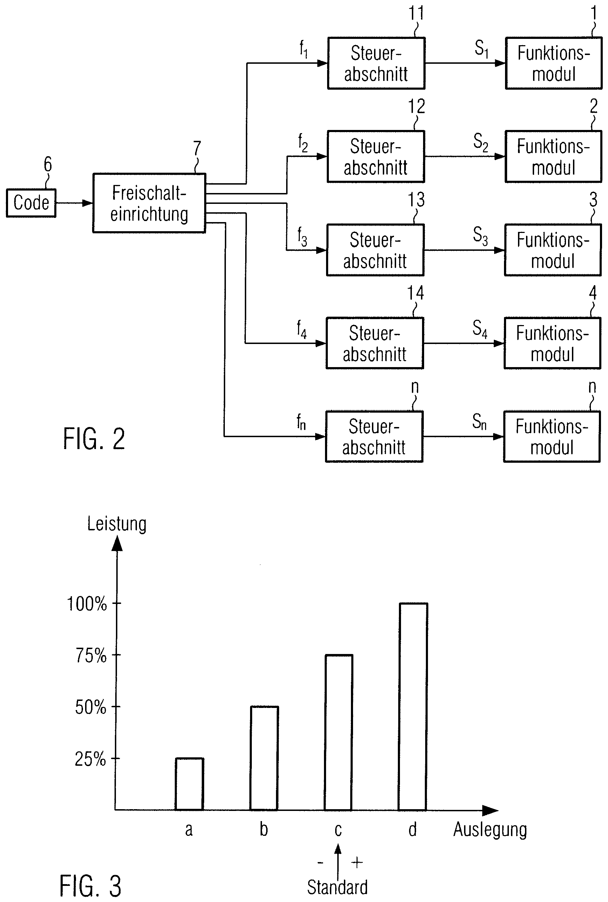

Hier ist die Füllmaschine 10 die eigentliche Hauptmaschine und umfasst eine Steuerung 22, die verschiedene Steuerabschnitte 11, 12, 13, 14, ... (siehe auch Fig. 2) für die unterschiedlichen Funktionsmodule 1, 2, 3, 4, n (Fig. 2) aufweist. Die Funktionsmodule der Füllmaschine sind hier z.B. der Antrieb für das Förderwerk 5, Antrieb für die Förderkurve, Antriebe für die Abdreheinheit, den Füllwolf, die Verdrängereinheit, die Trenneinheit, für die Transporteinheit, für die Aufhängeeinrichtung, Vakuumpumpe für den Füller, für die Hebevorrichtung, Lüftung und ggfs. weitere Antriebe. Es ist möglich, dass Funktionsmodule in Form von unterschiedlichen Vorschaltgeräten, wie beispielsweise Abdreheinheit, Füllwolf 9 , Verdrängereinheit 15, Trenneinheit 16, Transporteinheit 17, oder Aufhängeeinrichtung 18, Hebevorrichtung, keine eigene Steuerung aufweisen, sondern auch von Steuerabschnitten in der Steuerung 22 in der Füllmaschine 10 angesteuert werden. Die Steuerung 22 bzw. die Steuerabschnitte können also in der Maschine integriert aber auch extern angeordnet sein. Auch im Falle einer zentralen Steuerungseinheit kann diese innerhalb oder außerhalb eines Funktionsmoduls, bzw. der Maschine untergebracht sein.

Gemäß der vorliegenden Erfindung kann die Maschine also bereits vor der Auslieferung hard- und softwaremäßig für eine spätere Leistungs- und/oder Funktionserweiterung vorbereitet werden. Dabei wird typischerweise die Steuerung und/oder Software der Maschine entsprechend vorbereitet.

Wie insbesondere aus Fig. 3 hervorgeht, weist ein Funktionsmodul beispielsweise eine maximal mögliche Leistung, d. h. die maximal mögliche Auslastung von 100 % auf. Im Falle des Förderwerks liegt beispielsweise die maximal mögliche Leistung bei 500 l/min. Es ist nun aber auch möglich, die Nahrungsmittelmaschine in leistungs- und/oder funktionsreduzierter Ausführung anzubieten. Das bedeutet, dass beispielsweise werksseitig der Leistungsbereich a,b,c auf einen maximalen Leistungsbereich begrenzt wird, der unterhalb der maximal möglichen Leistung d des Funktionsmoduls liegt. Wie aus Fig. 3 hervorgeht, kann dabei die Leistung beispielsweise auf 25 %, 50 % oder 75 % begrenzt werden. Höhere Leistungsbereiche können dann bei Bedarf freigeschaltet werden. Wurde beispielsweise werkseitig der Leistungsbereich auf den Leistungsbereich c beschränkt, so kann bei Bedarf des Kunden der höhere Leistungsbereich d gegen Bezahlung freigeschaltet werden.

Ebenso ist es möglich, dass die Vorrichtung bei Auslieferung Funktionsmodule umfasst, die zunächst gesperrt sind. Bei Bedarf des Kunden können entsprechende Funktionsmodule dann gegen Bezahlung freigeschaltet werden.

Dazu weist, wie insbesondere aus Fig. 2 hervorgeht, die erfindungsgemäße Nahrungsmittelmaschine mindestens eine Freischalteinrichtung 7 auf, über die nach Eingabe einer Zugriffsberechtigung mindestens ein Funktionsmodul freischaltbar ist und/oder ein Leistungsbereich a,b,c,d aus mehreren möglichen Leistungsbereichen mindestens eines Funktionsmoduls 1,2,3,4 freischaltbar ist. Die Freischalteinrichtung 7 ist vorzugsweise ein durch einen Code aktivierbares Freischaltmodul (Leistungs- und/oder Funktionsbegrenzer). Die Freischalteinrichtung 7 umfasst dabei beispielsweise ein Hardware- oder Software-Interlock, logische Verknüpfungen in einer Schalteinrichtung, eine mechanische Verriegelung, Das Freischaltmodul 7 weist eine Eingabeeinrichtung 6 auf, über die ein Code eingegeben werden kann, um eine Funktions- bzw. Leistungsanpassung vorzunehmen. Die Funktions- bzw. Leistungsanpassung kann durch den Kunden selbst oder durch Service-Personal vor Ort erfolgen. Der Code kann über eine entsprechende Eingabetastatur eingegeben werden oder über eine einsteckbare Guthabenkarte bzw. Chip oder Chipkarte, ein einführbares Speichermedium, durch Fernaktivierung, z. B. nach Überweisung eines entsprechenden Betrags, oder mittels Online-Freischaltung, z. B. in Verbindung mit Kreditkartenbezahlung, Online-Abwicklung, Vorauskasse, Bezahlsystemen, oder über einen optischen Sensor zur Erfassung von 2D- oder 3D-Codes etc. Die Art und der Umfang der Funktions- bzw. Leistungsanpassung kann entweder über die Eingabeeinrichtung 6 erfolgen und/oder über eine separate Eingabeeinrichtung.

Die Freischalteinrichtung 7 ist mit den unterschiedlichen Steuerabschnitten 11,12,13,14, ... für die entsprechenden Funktionsmodule 1, 2, 3, 4, n verbunden, bzw. in einen Steuerabschnitt oder in der Zentralsteuerung integriert. Dabei wird ein entsprechendes Signal f1, f2, f3, f4, fn von der Freischalteinrichtung 7 an die einzelnen Steuerabschnitte 11, 12, 13, 14, ... geleitet. Entsprechend dem Signal f1, f2, f3, f4, fn werden Steuersignale S1, S2, S3, S4, Sn an die Funktionsmodule 1, 2, 3, 4, n geleitet, so dass diese angesteuert und betrieben werden können oder aber gesperrt sind und in einem bestimmten Leistungsbereich betrieben werden können.

Durch Eingabe einer Zugriffsberechtigung ist ein Schutz vor unberechtigten Leistungs- bzw. Funktionsanpassungen gewährleistet. Dabei können mehrere wählbare Leistungsbereiche a, b, c, d vorab in einem Speicher festgelegt und ausgewählt werden oder es ist auch möglich, die Leistungsbereiche stufenlos freizuschalten.

Aus Sicherheitsgründen ist es vorteilhaft, wenn die Freischalteinrichtung 7 oder die Steuerabschnitte 11, 12, 13, 14, ... für unterschiedliche Funktionsmodule 1, 2, 3, 4, n derart ausgelegt sind, dass bei Begrenzung der Leistung eines Funktionsmoduls 1, 2, 3, 4, n automatisch der Leistungsbereich anderer Funktionsmodule begrenzt wird und/oder ein erhöhter Leistungsbereich eines Funktionsmoduls 1, 2, 3, 4, n nur dann freischaltbar wird, wenn auch ein entsprechend erhöhter Leistungsbereich eines anderen oder anderer Funktionsmodule freigeschaltet worden sind. Das bedeutet, dass beispielsweise die Leistung des Förderwerks 5 nur dann erhöht werden kann, wenn auch der Antrieb für die Abdreheinheit 8 eine entsprechende Leistung aufweist oder die Leistung des Antriebs der Förderkurve im Fülltrichter eine entsprechende Leistung aufweist.

Es ist auch möglich, dass es mehrere Freischalteinrichtungen 7 zu unterschiedlichen Steuerabschnitten gibt.

Die Freischalteinrichtung 7 ist vorzugsweise in die Steuerung 22 der Maschine, hier der Füllmaschine 10, integriert. Alternativ kann sich die Freischalteinrichtung, z. B. in Linienanwendungen, auch in einem Vorsatzgerät, beispielsweise in einer Abdrehlinie, einer Clipmaschine, etc. befinden, die dann auch wieder mit dem Steuerabschnitt für das jeweilige Modul verbunden ist, wobei dieser Steuerabschnitt dann wiederum in der Steuerung 22 der Füllmaschine integriert sein kann. Die Freischalteinrichtung kann jedoch auch die Information über den zulässigen, d. h. z. B. den käuflich erworbenen Leistungs- und/oder Funktionsumfang an einen Zentralrechner weitergeben. Dadurch wird sichergestellt, dass das Vorsatzgerät von der Zentralsteuerung auch nur im zulässigen Bereich betrieben wird. Diese zentrale Steuereinrichtung muss nicht in der Füllmaschine integriert sein, sondern kann auch als separate Steuerung ausgeführt sein. Möglich ist auch die Ansteuerung von einem Leitstand aus.

Eine Möglichkeit besteht darin, eine Maschine mit Standardauslegung in leistungs- und/oder funktionsreduzierter Ausführung anzubieten. Der Kunde kann je nach Bedarf und finanziellen Möglichkeiten bis zur maximal möglichen Leistung der Maschine jede beliebige Leistung frei wählen und erhält so seine bezüglich Leistung bzw. Preis höchst flexibel individuell angepasste Maschine. Da die Maschinen auf die Maximalleistung ausgelegt sind, entfällt das aufwändige Generieren zusätzlicher Maschinentypen. Es ist keine zusätzliche Dokumentation und keine zusätzliche Logistik bzw. Teileversorgung (der Gleichteile), Maschinenlagerhaltung, Schulungsaufwand für Monteure, etc. erforderlich. So kann z. B. das gesamte Maschinenprogramm eines Herstellers oder nur ein Teil davon beispielsweise leistungsreduziert zu reduziertem Preis angeboten werden. Damit kann der Hersteller einfach, flexibel und kostengünstig auf Kundenwünsche reagieren und z. B. auch im Wettbewerb mit Billiganbietern gezielter agieren.

Eine weitere Möglichkeit besteht darin, die Komponenten der Maschine bereits bei der Entwicklung so auszulegen, dass sie verschiedene Leistungsbereiche und/oder Funktionen abdecken können. Zum Beispiel wird ein Antrieb eingebaut, der standardmäßig nicht voll ausgelastet ist. Zum Auslieferungszeitpunkt kann dann beispielsweise die tatsächlich vom Kunden gewünschte Leistung freigeschaltet werden. Auch zu jedem beliebigen späteren Zeitpunkt kann dann der entsprechende Antrieb bei Bedarf eine höhere als die zunächst im Auslieferungszustand eingestellte Leistung bereitstellen. Auch diese Vorgehensweise ermöglicht den Einbau vieler Gleichteile mit den bekannten Vorteilen.

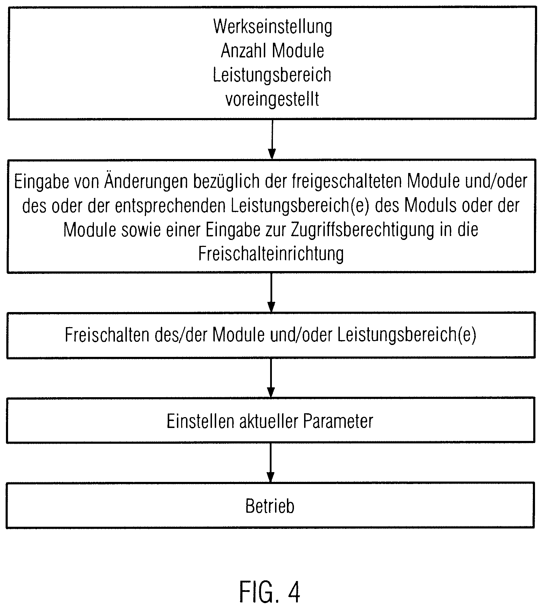

Fig. 4 zeigt ein Betriebsverfahren gemäß der Erfindung. Bei Verkauf einer Anlage weist die Anlage eine Werkseinstellung auf, bei der die Anzahl der Module, die freigeschaltet sind, sowie entsprechende Leistungsbereiche a, b, c, d voreingestellt sind.

Bei Bedarf kann nun die Anzahl der freigeschalteten Module zumindest zeitweise erweitert werden und die Leistungsbereiche eines Moduls oder mehrerer Module können erhöht werden. Dazu wird in die Freischalteinrichtung 7 eine entsprechende Zugriffsberechtigung, beispielsweise in Form eines Codes eingegeben. Die Eingabe beinhaltet Information bezüglich der Funktions- und Leistungsanpassung für bestimmte Funktionsmodule. Ist diese Information noch nicht in der Eingabe enthalten kann eine Eingabe (auch über eine andere Eingabeeinrichtung) der gewünschten Änderungen separat vorgenommen werden.

In Abhängigkeit der Eingabe können nun bestimmte Module freigeschaltet werden und/oder Leistungsbereiche erhöht werden. Sind entsprechende freigeschaltete Module festgelegt und die Leistungsbereiche freigeschaltet, können für den Betrieb die aktuellen Parameter eingestellt werden und der Betrieb erfolgen. Die Bezahlung erfolgt vorzugsweise vor der Freischaltung. Es ist auch möglich zunächst bestimmte Module und Leistungsbereiche freizuschalten und dann die tatsächlich verwendeten Module und Leistungsbereiche z.B. online zu erfassen und dann abzurechnen. Es ist auch möglich alle Module und Leistungsbereiche zur Verfügung zu stellen und dann eine Einrichtung bereitzustellen, die die verwendeten Funktionsmodule und deren Leistungsbereiche erfasst. Diese Daten werden, z.B. online über eine Datenverbindung zum Hersteller geschickt und können dann abgerechnet werden.

## Patentansprüche

1. Nahrungsmittelmaschine, insbesondere Füllmaschine (10) und/oder Abdrehlinie, zum Herstellen von Lebensmitteln, insbesondere von Wurst, mit
einem oder mehreren Funktionsmodulen (1, 2, 3, 4, n) und
einem oder mehreren Steuerabschnitten (11, 12, 13, 14, n) zum Ansteuern der entsprechenden Funktionsmodule (1, 2, 3, 4, n)
**gekennzeichnet durch**
mindestens eine Freischalteinrichtung (7) in Form eines durch einen Code aktivierbaren Freischaltmoduls, über die nach Eingabe einer Zugriffsberechtigung
ein Leistungsbereich (a, b, c, d) aus mehreren möglichen Leistungsbereichen mindestens eines Funktionsmoduls freischaltbar ist.

2. Nahrungsmittelmaschine nach Anspruch 1, **dadurch gekennzeichnet, dass** die Freischalteinrichtung (7) mit einer Eingabeeinheit (6) verbunden ist und mit den Steuerabschnitten (11, 12, 13, 14,n) verbunden ist und ein Signal (f1, f2, f3, f4, fn) entsprechend der Eingabe an einen Steuerabschnitt (11, 12, 13, 14,n) eines Funktionsmoduls (1, 2, 3, 4, n) leiten kann, wodurch in Abhängigkeit des Signals (f1, f2, f3, f4, fn) das Funktionsmodul (1, 2, 3, 4, n) ansteuerbar oder nicht ansteuerbar wird und/oder das Funktionsmodul in einem bestimmten Leistungsbereich betreibbar ist.

3. Nahrungsmittelmaschine nach Anspruch 1 oder 2, **dadurch gekennzeichnet, dass** mehrere wählbare Leistungsbereiche (a, b, c, d) in einem Speicher festgelegt und freischaltbar sind oder die Leistungsbereiche stufenlos freischaltbar sind, oder der gewählte Leistungsbereich während des Freischaltprozesses an den oder die Steuerabschnitte übermittelt wird.

4. Nahrungsmittelmaschine nach mindestens einem der Ansprüche 1 bis 3, **dadurch gekennzeichnet, dass** der Leistungsbereich eines Funktionsmoduls auf eine maximale Leistung begrenzbar ist, die unterhalb der maximal möglichen Leistung des Funktionsmoduls ist.

5. Nahrungsmittelmaschine nach mindestens einem der Ansprüche 1 bis 4, **dadurch gekennzeichnet, dass** die Steuerabschnitte (11, 12, 13, 14,n) und/oder die mindestens eine Freischalteinrichtung für mindestens eines der Funktionsmodule (1, 2, 3, 4, n) derart ausgelegt ist, dass bei Begrenzung der Leistung eines Funktionsmoduls automatisch der Leistungsbereich mindestens eines anderen Funktionsmoduls begrenzt wird und/oder
ein erhöhter Leistungsbereich mindestens eines Funktionsmoduls nur dann freischaltbar wird, wenn auch ein entsprechend erhöhter Leistungsbereich eines anderen oder anderer Funktionsmodule freigeschaltet worden sind.

6. Nahrungsmittelmaschine nach mindestens einem der Ansprüche 1 bis 5, **dadurch gekennzeichnet, dass** die Nahrungsmittelmaschine mindestens eines folgender Funktionsmodule aufweist:
Antrieb für das Förderwerk (5), Antrieb für die Förderkurve, Antrieb für die Abdreheinheit (8), Antrieb für den Füllwolf (9), Antrieb für die Verdrängereinheit (15), Antrieb für die Trenneinheit (16), Antrieb für eine Transporteinheit (17), Antrieb für eine Aufhängeeinrichtung (18), Vakuumpumpe für den Füller (19), Antrieb für die Hebevorrichtung, Lüftung und weitere Antriebe,
wobei mindestens eines folgender Funktionsmodule über die mindestens eine Freischalteinrichtung (7) freischaltbar ist: Antrieb der Förderkurve, Antrieb der Abdreheinheit, Füllwolf-Antrieb, Antrieb der Verdrängereinheit, Antrieb der Trenneinheit, Antrieb der Transporteinheit, Antrieb der Aufhängeeinrichtung, Vakuumpumpe, Antrieb der Hebevorrichtung und ggfs. weitere Antriebe,
und/oder wobei unterschiedliche Leistungsbereiche von mindestens einem der folgenden Funktionsmodule freischaltbar sind: Antrieb für das Förderwerk (5), Antrieb für die Förderkurve, Antrieb der Abdreheinheit (8), Antrieb des Füllwolfs, Antrieb der Verdrängereinheit, Antrieb der Trenneinheit, Antrieb der Transporteinheit (17), Antrieb der Aufhängeeinrichtung (18), Vakuumpumpe (19), Antrieb für die Hebevorrichtung, Lüftung und ggfs. weitere Antriebe.

7. Nahrungsmittelmaschine nach mindestens einem der Ansprüche 1 bis 6, **dadurch gekennzeichnet, dass** die Freischalteinrichtung (7) ein Hardware- oder Software-Interlock, und/oder eine logische Verknüpfungen in einer Schalteinrichtung, und/oder eine mechanische Verriegelung, und/oder einen optischen Sensor zur Erfassung von 2D- oder 3D-Codes umfasst

8. Verfahren zum Betreiben einer Nahrungsmittelmaschine nach mindestens einem der Ansprüche 1 bis 7 mit folgenden Schritten:
a) Eingabe von Änderungen bezüglich Änderungen des entsprechenden Leistungsbereichs des Funktionsmoduls oder der Funktionsmodule sowie einer Eingabe zur Zugriffsberechtigung in eine Freischalteinrichtung (7) in Form einer durch einen Code aktivierbaren Freischaltmoduls,
b) Freischalten eines Leistungsbereichs aus mehreren möglichen Leistungsbereichen eines Funktionsmoduls oder mehrerer Funktionsmodule,
c) Einstellen aktueller Prozessparameter zum Betreiben der Nahrungsmittelmaschine,
d) Betrieb der Nahrungsmittelmaschine.

9. Nahrungsmittelmaschine nach mindestens einem der Ansprüche 1-7, **dadurch gekennzeichnet, dass** die tatsächlich genutzten Funktionsmodule und/oder Leistungsbereiche erfassbar sind und entsprechend abrechenbar sind.

10. Nahrungsmittelmaschine nach Anspruch 1, **dadurch gekennzeichnet, dass** über die mindestens eine Freischalteinrichtung nach Eingabe einer Zugriffsberechtigung mindestens ein Funktionsmodul freischaltbar ist.

11. Verfahren nach Anspruch 8, **dadurch gekennzeichnet, dass** in Schritt a) Änderungen bezüglich freizuschaltender Funktionsmodule (1, 2, 3, 4, n) oder eines freizuschaltenden Funktionsmoduls eingegeben werden können und in Schritt b) das oder die gewählten Funktionsmodule freigeschaltet werden können.

## Claims

1. Food processing machine, particularly a filling machine (10) and / or twisting line, for manufacturing foods, particularly sausages, with
one or more function modules (1, 2, 3, 4, n) and
one or more control sections (11, 12, 13, 14, n) for controlling the corresponding function modules (1, 2, 3, 4, n),
**characterised by**
at least one activation device (7) in the form of an activation module that can be activated by means of a code, by means of which after the input of an access authorisation a performance range (a, b, c, d) from a plurality of possible performance ranges of at least one function module can be activated.

2. Food processing machine according to Claim 1, **characterised in that** the activation device (7) is connected to an input unit (6) and is connected to the control sections (11, 12, 13, 14, n) and can conduct a signal (f1, f2, f3, f4, fn) corresponding to the input to a control section (11, 12, 13, 14, n) of a function module (1, 2, 3, 4, n), as a result of which, depending on the signal (f1, f2, f3, f4, fn) the function module (1, 2, 3, 4, n) can be controlled or not controlled and / or the function module can be operated in a particular performance range.

3. Food processing machine according to Claim 1 or 2, **characterised in that** a plurality of selectable performance ranges (a, b, c, d) are specified in a memory and can be activated or the performance ranges can be activated in a continuously variable manner or the selected performance range is conveyed to the control section(s) during the activation process.

4. Food processing machine according to at least one of the Claims 1 to 3, **characterised in that** the performance range of a function module can be limited to a maximum performance that lies below the maximally possible performance of the function module.

5. Food processing machine according to at least one of the Claims 1 to 4, **characterised in that** the control sections (11, 12, 13, 14, n) and / or the at least one activation device for at least one of the function modules (1, 2, 3, 4, n) is designed in such a way that when the performance of a function module is limited, the performance range of at least one other function module is automatically limited and / or
an increased performance range of at least one function module can only be activated if a correspondingly increased performance range of another function module or other function modules has been activated.

6. Food processing machine according to at least one of the Claims 1 to 5, **characterised in that** the food processing machine has at least one of the following function modules:
Drive for the conveyor (5), drive for the conveyor curve, drive for the twisting unit (8), drive for the inline grinder (9), drive for the squeezing unit (15), drive for the separating unit (16), drive for a transport unit (17), drive for the suspension device (18), vacuum pump for the filler (19), drive for the lifting device, ventilation and further drives,
wherein at least one of the following function modules can be activated by means of the at least one activation device (7): drive of the conveyor curve, drive of the twisting unit, inline grinder drive, drive of the squeezing unit, drive of the separating unit, drive of the transport unit, drive of the suspension device, vacuum pump, drive of the lifting device, and, where applicable, further drives,
and / or wherein different performance ranges of at least one of the following function modules can be activated: drive for the conveyor (5), drive of the conveyor curve, drive of the twisting unit (8), drive of the inline grinder, drive of the squeezing unit, drive of the separating unit, drive of the transport unit (17), drive of the suspension device (18), vacuum pump (19), drive of the lifting device, ventilation, and, where applicable, further drives.

7. Food processing machine according to at least one of the Claims 1 to 6, **characterised in that** the activation device (7) comprises a hardware or software interlock and / or logic interconnections in a switching device and / or a mechanical lock and / or an optical sensor for registering 2D or 3D codes.

8. Method for operating a food processing machine according to at least one of the Claims 1 to 7 with the following steps:
a) Input of changes regarding changes to the corresponding performance range of the function module or of the function modules as well as an input for access authorisation into an activation device (7) in the form of an activation module that can be activated by means of a code ,
b) Activation of a performance range from a plurality of possible performance ranges of a function module or of a plurality of function modules,
c) Selection of current process parameters for operating the food processing machine,
d) Operating the food processing machine.

9. Food processing machine particularly according to at least one of the Claims 1-7, **characterised in that** the function modules and / or performance ranges actually used can be registered and can be accordingly invoiced.

10. Food processing machine according to claim 1, **characterized in that** after input of an access authorisation at least one function module can be activated by the at least one activation device.

11. Method of claim 8, **characterized in that** in step a) changes regarding the function modules (1, 2, 3, 4, n) to be activated or the function module to be activated can be input and in step b) the selected function module(s) can be activated.

## Revendications

1. Machine pour produits alimentaires, notamment machine de remplissage (10) et/ou ligne de torsion, pour la fabrication de denrées alimentaires, notamment de saucisses, comprenant
un ou plusieurs modules fonctionnels (1, 2, 3, 4, n) et
une ou plusieurs sections de commande (11, 12, 13, 14, n) pour commander les modules fonctionnels (1, 2, 3, 4, n) correspondants,
**caractérisée par**
au moins un dispositif de déblocage (7) se présentant sous la forme d'un module de déblocage pouvant être activé par un code, par le biais duquel il est possible, après entrée d'une autorisation d'accès, de débloquer un domaine de capacité (a, b, c, d), composé de plusieurs domaines de capacité possibles, d'au moins un module fonctionnel.

2. Machine pour produits alimentaires selon la revendication 1, **caractérisée en ce que** le dispositif de déblocage (7) est relié à une unité d'entrée (6) et est relié aux sections de commande (11, 12, 13, 14, n), et peut acheminer un signal (f1, f2, f3, f4, fn), conformément à l'entrée, à une section de commande (11, 12, 13, 14, n) d'un module fonctionnel (1, 2, 3, 4, n), grâce à quoi, en fonction du signal (f1, f2, f3, f4, fn), le module fonctionnel (1, 2, 3, 4, n) peut être commandé ou ne peut pas être commandé et/ou le module fonctionnel peut fonctionner dans un domaine de capacité déterminé.

3. Machine pour produits alimentaires selon la revendication 1 ou 2, **caractérisée en ce que** plusieurs domaines de capacité (a, b, c, d) sélectionnables sont enregistrés dans une mémoire et peuvent être débloqués, ou les domaines de capacité peuvent être débloqués de manière progressive, ou le domaine de capacité sélectionné pendant le processus de déblocage est transmis à la section ou aux sections de commande.

4. Machine pour produits alimentaires selon au moins une des revendications 1 à 3, **caractérisée en ce que** le domaine de capacité d'un module fonctionnel peut être limité à une capacité maximale qui se situe en dessous de la capacité maximale possible du module fonctionnel.

5. Machine pour produits alimentaires selon au moins une des revendications 1 à 4, **caractérisée en ce que** les sections de commande (11, 12, 13, 14, n) et/ou l'au moins un dispositif de déblocage est/sont conçu.es, pour au moins un des modules fonctionnels (1, 2, 3, 4, n), de sorte qu'en cas de limitation de la capacité d'un module fonctionnel, le domaine de capacité d'au moins un autre module fonctionnel soit automatiquement limité et/ou un domaine capacité augmenté d'au moins un module fonctionnel ne puisse être débloqué qu'à condition qu'un domaine de capacité identiquement augmenté d'un autre module fonctionnel ou d'autres modules fonctionnels ait été débloqué.

6. Machine pour produits alimentaires selon au moins une des revendications 1 à 5, **caractérisée en ce que** la machine pour produits alimentaires comprend au moins un des modules fonctionnels suivants :
entraînement pour le dispositif d'avancement (5), entraînement pour la double-vis, entraînement pour l'unité de torsion (8), entraînement pour le hachoir de remplissage (9), entraînement pour l'unité de déplacement (15), entraînement pour l'unité de séparation (16), entraînement pour une unité de transport (17), entraînement pour un dispositif d'accrochage (18), pompe à vide pour le dispositif de remplissage (19), entraînement pour le dispositif de levage, ventilation et autres entraînements,
dans laquelle au moins un des modules fonctionnels suivants peut être débloqué par le biais de l'au moins un dispositif de déblocage (7) : entraînement de la double-vis, entraînement de l'unité de torsion, entraînement du hachoir de remplissage, entraînement de l'unité de déplacement, entraînement de l'unité de séparation, entraînement de l'unité de transport, entraînement du dispositif d'accrochage, pompe à vide, entraînement du dispositif de levage et, le cas échéant, autres entraînements, et/ou dans laquelle des domaines de capacité différents d'au moins un des modules fonctionnels suivants peuvent être débloqués : entraînement pour le dispositif d'avancement (5), entraînement pour la double-vis, entraînement de l'unité de torsion (8), entraînement du hachoir de remplissage, entraînement de l'unité de déplacement, entraînement de l'unité de séparation, entraînement de l'unité de transport (17), entraînement du dispositif d'accrochage (18), pompe à vide (19), entraînement pour le dispositif de levage, ventilation et, le cas échéant, autres entraînements.

7. Machine pour produits alimentaires selon au moins une des revendications 1 à 6, **caractérisée en ce que** le dispositif de déblocage (7) comprend un verrouillage matériel ou logiciel et/ou un chaînage logique dans un dispositif de commutation et/ou un verrouillage mécanique et/ou un capteur optique pour la saisie de codes 2D ou 3D.

8. Procédé pour faire fonctionner une machine pour produits alimentaires selon au moins une des revendications 1 à 7, comprenant les étapes suivantes :
a) entrée de modifications concernant le domaine de capacité correspondant du module fonctionnel ou des modules fonctionnels, ainsi qu'une entrée d'autorisation d'accès dans un dispositif de déblocage (7) se présentant sous la forme d'un module de déblocage pouvant être activé par un code,
b) déblocage d'un domaine de capacité, composé de plusieurs domaines de capacité possibles, d'un module fonctionnel ou de plusieurs modules fonctionnels,
c) réglage de paramètres de procédé actuels pour le fonctionnement de la machine pour produits alimentaires,
d) fonctionnement de la machine pour produits alimentaires.

9. Machine pour produits alimentaires selon au moins une des revendications 1 - 7, **caractérisée en ce que** les modules fonctionnels et/ou domaines de capacité effectivement utilisés peuvent être détectés et facturés en conséquence.

10. Machine pour produits alimentaires selon la revendication 1, **caractérisée en ce qu'**au moins un module fonctionnel peut être débloqué par le biais de l'au moins un dispositif de déblocage, après entrée d'une autorisation d'accès.

11. Procédé selon la revendication 8, **caractérisé en ce que**, dans l'étape a), des modifications concernant des modules fonctionnels (1, 2, 3, 4, n) à débloquer ou un module fonctionnel à débloquer peuvent être entrées et, dans l'étape b), le module ou les modules fonctionnels sélectionnés peuvent être débloqués.
